Europäisches Patentamt

European Patent Office

Office européen des brevets

Publication number: **0 276 904**

**A1**

# EUROPEAN PATENT APPLICATION

(21) Application number: 88300049.9

(22) Date of filing: 05.01.88

(51) Int. Cl.⁴ **F03D 3/06 , F03D 7/06**

(30) Priority: 06.01.87 PT 84063

(43) Date of publication of application:
03.08.88 Bulletin 88/31

(84) Designated Contracting States:
AT BE CH DE ES FR GB GR IT LI LU NL SE

(71) Applicant: **Baptista, Fernando Augusto**
**R. Padua Correia, 30**
**P-4400 V.N. Gaia(PT)**

Applicant: **Baptista, Joao Manuel Pereira Dias**
**R. Padua Correia, 30**
**P-4400 V.N. Gaia(PT)**

(72) Inventor: **Baptista, Fernando Augusto**
**R. Padua Correia, 30**
**P-4400 V.N. Gaia(PT)**
Inventor: **Baptista, Joao Manuel Pereira Dias**
**R. Padua Correia, 30**
**P-4400 V.N. Gaia(PT)**

(74) Representative: **Meeks, Frank Burton et al**
**BREWER & SON 5-9 Quality Court Chancery**
**Lane**
**London WC2A 1HT(GB)**

(54) **Wind turbine and device for its safety.**

(57) The invention relates to a turbine whose axis (1) turns vertically and to which are connected in a radial way, holders (2,3) for the blades (12,13) made up by metallic frames surrounding an area materialized by a textile canvas.

The blades turn over themselves synchronically with the turbine by means of a set of cogwheels (8) in order to display the most favourable position for a maximum thrust of the wind (14).

The safety devices work by the loosening of one side of the canvas and by the automatic rolling on the respect've roller rod (15,16), when the pressure of the wind surpasses a predetermined value.

FIG. 1

## WIND TURBINE AND DEVICES FOR ITS SAFETY

In the present state of the art, horizontal axis wind turbines have been shown to take better advantage of the wind's energetic power. However this better energy yield is still rather low. Known different kinds of vertical axis wind turbines have an even lower yield because the shape and position of the blades do not favour best utilisation of wind thrust and also because the effective area of the blades is small compared with the total collector structure.

A new kind of collector which is the subject of the invention solves these two fundamental problems wherein there is provided a wind turbine comprising a substantially vertical axis to which are rotatably and radially connected two sets of arms supporting a plurality of turbine blades, each blade being rotatably mounted about its own substantially vertical axis, one set of arms supporting the upper parts of the blades and the other set of arms supporting the lower parts of the blades and means for enabling each turbine blade to rotate about its own axis so that the total resistance to the wind of all the blades at any instant ensures rotation of the sets of arms,and safety means capable of reducing the cross-sectional area of the blades in contact with very strong winds.

Each blade has a positive resistant action to the wind over almost its entire displacement, having a position (when the blade plane is perpendicular to the wind direction) in which that action has a maximum yield.

The possible area of the blades allows the wind action over the entire global structure of the collector, allowing a greater yield. Also because the area of each blade is proportionally larger, the wind action yield is very large.

The invention is further described below with reference to the drawings, wherein:-

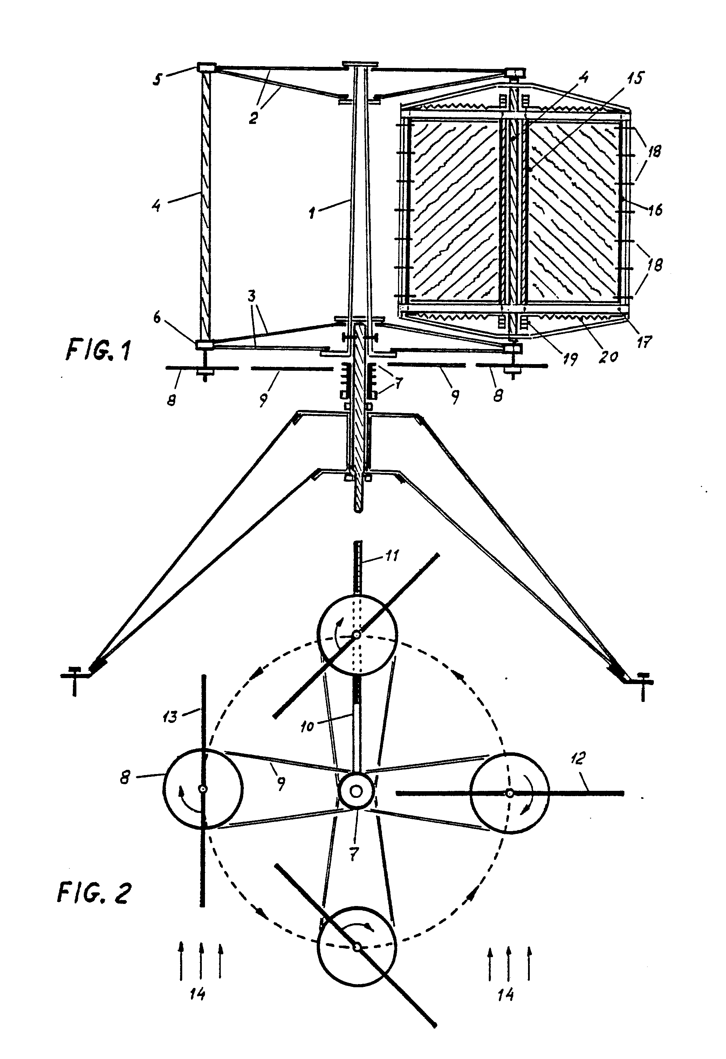

Fig. 1 shows a schematic representation of a vertical view of the principal elements of the turbine; and

Fig. 2 shows a schematic representation of a horizontal view of the system for synchronising the rotational movement of the blades.

The turbine preferably comprises four blades and its structure is made up oʹ a central axis 1, to which are rigidly fixed, in a symmetrical and radial way, two sets of four arms, each sustaining the blades; one set 2 is placed on the upper end of the axis, the other 3 on the lower end of the axis.

Each blade has a plane surface, preferably made of an impermeable textile canvas bordered by a metallic profiled frame. This rotates on a vertical axis 4 which divides the blade in two equal and symmetrical sections.

The ends of the axis of each blade are supported in bearing boxes 5 and 6 placed at the ends of each one of the sets of arms 2 and 3.

The rotation of each blade about its own axis 4 is synchronised with the rotation of the whole turbine.

The rotation of each blade is in reverse direction to that of the whole turbine.

The rotation of each blade is also in accordance with the position of a steering unit 11 that is parallel with the wind direction.

For each 360 degrees of rotation of the turbine, each blade rotates only half as much, that is 180 degrees.

To have a mutual synchronization of the blades' rotation and of these with the changing position of the steering unit, there is used preferably, one set of four cogwheels (as many as the number of blades), together with a free bearing box 7 centered with the support axis of the turbine.

For each one of these cogwheels, there is another cogwheel 8 (with a double number of cogs) mounted in the lower end of each blade axis, both wheels in the same plane and connected by means of a sprocket chain 9.

The free bearing box 7 and the plane of the steering unit 11 are connected by an arm 10 and thus movement of the bearing box always accompanies any change in the direction of the wind.

By means of the synchronization set this way, the plane of each blade and the plane of the steering unit make an angle of 90 degrees, when the resistant action of the blade is at a maximum (12) and a zero degrees angle is made when that resistant action is minimum (13).

With a four blade turbine, its total work can be interpreted as the action of three blades in permanent resistance to the positive thrust of the wind, from which results a very high energy yield.

Cyclones, sudden blasts and such, can make the wind velocity unbearable for the safety of the turbine. To prevent damage the canvas that makes up the surface of each blade is divided into two sections along the axis of the blade. In each of these sections, the side of the canvas next to the axis of the blade is fixed to a roller rod 15 parallel and adjacent thereto. The opposite side of the canvas is fixed to a supporting rod 16 parallel to the roller rod and each of the two ends can run along a guided way parallel to the upper and lower profiles of the blade frame 17.

A certain number of springs 18 placed at equal distances connect the supporting rod and the nearest edge of the blade profile. These springs, when subject to a certain strain from the canvas (corresponding to an unbearable action of the wind) open and the supporting rod of the canvas separates from the profile.

Each roller rod is provided with a small carriage mechanism 19 with a rolled cable and tensioned by a spring 20; this system exerts some strain in the canvas. When the canvas comes loose by the unbearable action of wind, it is automatically rolled by the roller rod, as this must spin when activated by the system of the spring - cable - small carriage mechanism.

The turbine with the canvas rolled offers a minor resistance to the wind and thus it will not be destroyed by wind.

## Claims

1. A wind turbine comprising a substantially vertical axis (1) to which are rotatably and radially connected two sets of arms (2,3) supporting a plurality of turbine blades (12,13), each blade being rotatably mounted about its own substantially vertical axis (4), one set of arms (2) supporting the upper parts of the blades and the other set of arms (3) supporting the lower parts of the blades and means (5,6,7,8,9) for enabling each turbine blade to rotate about its own axis so that the total resistance to the wind of all the blades at any instant ensures rotation of the sets of arms, and safety means (15,16,17,18) capable of reducing the cross-sectional area of the blades in contact with very strong winds.

2. A wind turbine incorporating devices for its safety, wherein its structure is made up of a central and vertical axis (1), to which are rigidly connected, in a symmetrical and radial way, two sets of arms (2,3) sustaining blades (12,13), one set (2) on the upper end of the axis, the other set (3) on the lower end of the axis, whose arms are provided in its free end with a bearing box (7).

3. A wind turbine incorporating devices for its safety, as claimed in claim 2, wherein each blade comprises a metallic profile frame that surrounds a canvas and wherein each blade turns around itself on a vertical symmetrical axis (4), which divides the blade into two sections and whose ends take support on the bearing boxes (5,6) of corresponding arms.

4. A wind turbine incorporating devices for its safety, as claimed in claim 3, wherein each blade rotates in opposite direction to the rotation of the turbine as a whole

5. A wind turbine incorporating devices for its safety, as claimed in claim 3 or 4, wherein the angular movement of rotation of each blade is half of the angular movement of rotation of the turbine.

6. A wind turbine incorporating devices for its safety, as claimed in claim 3 or 4, wherein the rotation of the blades is mutually synchronous and synchronous with the turbine rotation and influenced by the position of a steering unit (11).

7. A wind turbine incorporating devices for its safety, as claimed in claim 6, wherein synchronization and influence are achieved by means of a gear couple, which includes a free bearing box (7), centered with the vertical axis of the turbine.

8. A wind turbine incorporating devices for its safety, as claimed in any one of claims 2 to 7, wherein the safety of the turbine against cyclonic winds is achieved by means of rolling the canvas which constitutes the surface of each section of each blade.

9. A wind turbine incorporating devices for its safety, as claimed in claim 8, wherein in order to obtain the rolling of the canvas, this is fastened with pressure springs (18) whose fastening charge is defined in accordance with the maximum bearable wind velocity, and on the other side are used roller rods (15,16) driven preferably by pulling springs by means of rollers and cables rolled over these.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | GB-A-1 486 338 (BARNES)<br>* Page 1, line 41 - end * | 1 | F 03 D 3/06<br>F 03 D 7/06 |
| A |  | 2-7 |  |
|  | --- |  |  |
| Y | US-A-4 545 729 (STORM)<br>* Column 3, line 44 - column 11, line 40 * | 1 |  |
| A |  | 3,8,9 |  |
|  | ----- |  |  |

TECHNICAL FIELDS SEARCHED (Int. Cl.4)

F 03 D

The present search report has been drawn up for all claims

| Place of search | Date of completion of the search | Examiner |
|---|---|---|
| THE HAGUE | 27-04-1988 | DE WINTER P.E.F. |

EPO FORM 1503 03.82 (P0401)